# EUROPÄISCHE PATENTSCHRIFT

(11) **EP 0 659 131 B1**
(45) Veröffentlichungstag und Bekanntmachung des Hinweises auf die Patenterteilung: **29.01.1997**
(21) Anmeldenummer: 93919265.4
(22) Anmeldetag: 04.09.1993
(51) Int. Cl.: B60S 1/34

(54) **WISCHARM**
WINDSHIELD WIPER ARM
BRAS D'ESSUIE-GLACE

(30) Priorität: 16.09.1992 DE 4230961
(43) Veröffentlichungstag der Anmeldung: 28.06.1995
(73) Patentinhaber: ITT Automotive Europe GmbH, 60488 Frankfurt am Main (DE)
(72) Erfinder: BIENERT, Herbert, D-74354 Besigheim (DE); EGNER-WALTER, Bruno, D-74076 Heilbronn (DE); FINK, Andreas, D-71723 Grossbottwar (DE)
(86) Internationale Anmeldenummer: EP9302392
(87) Internationale Veröffentlichungsnummer: WO9406654

(56) Entgegenhaltungen:
- DE-A- 3 624 270
- DE-A- 3 926 714
- FR-A- 2 184 348
- FR-A- 2 550 110
- FR-A- 2 563 482
- GB-A- 2 117 630

## Beschreibung

Die Erfindung betrifft einen Wischarm, insbesondere zur Reinigung einer Scheibe eines Kraftfahrzeugs, mit einem Befestigungsteil, welches eine Aufnahme für eine Wischerwelle aufweist und die Aufnahme an einem ein Rückenteil bildendes Blechteil angeformt und von mit dem Rückenteil verbundenen Seitenwangen flankiert ist, wobei am Befestigungsteil die Aufnahme, das Rückenteil und die Seitenwangen einteilig angeformt sind und die Kanten der Aufnahme und der Seitenwagen des Befestigungsteiles in Richtung auf die Fahrzeugscheibe zeigen. Ein solcher Wischarm ist aus GB-A-2 117 630 bekannt.

Mit der DE 39 26 714 A1 ist ein Wischarm bekannt geworden, der ein Befestigungsteil aufweist, welches von einem tiefgezogenen Blechteil gebildet wird. Dieses Blechteil wird aus einem Blechstreifen ausgestanzt und in einer Tiefziehvorrichtung in die gewünschte Form gebogen. Das Befestigungsteil besteht im wesentlichen aus zwei Elementen, nämlich einer Aufnahme für die Wischerwelle und einem die Aufnahme umgebenden Blechmantel. Zwar sind die Aufnahme und der Blechmantel aus einem einzigen Blechstreifen hergestellt, jedoch ist die Aufnahme nicht unmittelbar mit dem an der Aufnahme anliegenden Rückenteil des Blechmantels verbunden, sondern liegt an diesem nur lose an. Es hat sich herausgestellt, daß bei einer einstückigen Verbindung von Rückenteil und Aufnahme größere Kräfte und Drehmomente übertragen werden könnten, so daß Verformungen des Befestigungsteils bei blockiertem Wischarm nicht zu befürchten sind.

Mit der DE 34 28 795 A1 und der FR 2 550 110 B1 ist ein Befestigungsteil bekannt geworden, welches ebenfalls durch Tiefziehen hergestellt wird. Bei diesem Befestigungsteil ist die Aufnahme für die Wischerwelle einstückig mit Rückenteil ausgebildet, so daß mit einem derartigen Befestigungsteil höhere Momente übertragen werden können. Bei diesem Befestigungsteil ist jedoch eine spezielle Abdeckkappe erforderlich, die nach dem Anschrauben des Befestigungsteils der Wischerwelle das Wischerwellenende und die Befestigungsmutter übergreift und abdeckt. Für diese Abdeckung muß also ein gesondertes Bauelement vorgesehen werden, welches elastisch oder beweglich am Befestigungsteil montiert werden muß.

Ein Wischarm mit den Merkmalen des Oberbegriffs des Anspruchs 1 ist aus der GB 2 117 630 A bekannt. Bei diesem Wischarm wird die Aufnahme für eine Wischervelle von einem einfach in Richtung auf die Fahrzeugscheibe eingezogenen und konisch aufgeweiteten Hals gebildet. Wegen der geringen Wanddicke der Aufnahme bzw. des Rückenteiles des Befestigungsteiles ist es schwierig, die für die dauerhafte Übertragung hoher Drehmomente von der Wischerwelle auf den Wischarm erforderliche Festigkeit und Verdrehsicherheit der Verbindung von Wischerwelle und Wischarm zu gewährleisten.

Aufgabe der Erfindung ist es, einen Wischarm der eingangs beschriebenen Art dahingehend zu verbessern, daß dauerhaft hohe Drehmomente von der Wischerwelle auf den Wischarm übertragen werden können und kein zusätzliches Abdeckelement für das Befestigungsteil erforderlich ist.

Diese Aufgabe wird erfindungsgemäß durch einen Wischarm mit den Merkmalen des Anspruchs 1 gelöst.

Dadurch, daß zur Herstellung der Aufnahme für die Wischerwelle der in Richtung auf die Fahrzeugscheibe eingezogene und konisch aufgeweitete Hals so gestaucht wird, daß Material zur Konusspitze gedrückt ist, werden die Abschnitte, in denen die Aufnahme im Bereich der Materialdicke des Rückenteiles den konischen Befestigungsabschnitt der Wischewelle kontaktiert bzw. die Befestigungsmutter eventuell über eine zwischengelegte Unterlegscheibe auf den Rückenteil drückt, großflächiger ausgebildet. Dadurch wird die Festigkeit und Verdrehsicherheit der Verbindung von Wischerwelle und Wischarm erhöht. Beim Stauchen des Halses tritt durch die Kaltverformung außerdem eine Materialverfestigung ein, die sich ebenfalls vorteilhaft auf die Übertragung hoher Drehmomente von der Wischerwelle auf den Wischarm auswirkt.

Die Kanten des tiefgezogenen Befestigungsteils bzw. die Kanten der Aufnahme und der Seitenwangen zeigen in Richtung auf die Fahrzeugscheibe. Durch diese Ausgestaltung des Befestigungsteils wird eine im wesentlichen U-förmige Gestalt geschaffen, die in Richtung der Fahrzeugscheibe offen ist. Dies hat den Vorteil, daR alle Kanten des Befestigungsteils in Richtung auf das Fahrzeug weisen und dadurch die Gefahr einer Verletzung auf ein Minimum reduziert wird. Außerdem bedarf es keiner Abdeckkappe, die das Befestigungsteil nach dem Aufsetzen auf der Wischerwelle nach außen hin abschließen muß, um die Verletzungsgefahr an den Kanten zu vermeiden. Das die Wischerwelle umgreifende Befestigungsteil wird von einer Mutter gehalten, die auf dem Rückenteil des Befestigungsteils aufliegt. Diese Mutter kann z.B. durch einen Kunststoffstopfen, der auf die Mutter aufgesetzt wird, verdeckt werden. Es ist jedoch auch denkbar, daß die Mutter als Hutmutter ausgebildet wird, so daß ein die Mutter abdeckendes Kunststoffteil nicht mehr erforderlich ist. Über die in Richtung auf die Fahrzeugscheibe weisenden Kanten kann das Befestigungsteil so gestaltet werden, daß sich das Befestigungsteil unmittelbar bis zur Karosserieoberfläche erstreckt. Ferner erlaubt die erfindungsgemäße Ausgestaltung des Befestigungsteils eine extrem flache Bauweise, wodurch weitere Gestaltungsmöglichkeiten und optimale aerodynamische Eigenschaften erzielt werden können.

Bei einer Weiterbildung ist vorgesehen, daß das Rückenteil eben von den Seitenwangen in die Aufnahme übergeht. Dies hat den Vorteil, daß die das Befestigungsteil am Ende der Wischerwelle festlegende Mutter vollflächig auf dem Rückenteil aufliegen kann, wodurch ein sicherer Halt gewährleistet und ein unbeabsichtigtes, unzeitiges Lösen vermieden wird. Zwischen der Befestigungsmutter und dem Rückenteil können auch Dichtscheiben und/oder Federringe eingesetzt werden. Bevorzugt werden selbstsichernde Muttern verwendet.

Durch eine empfohlene Weiterbildung der Erfindung, wonach der Konuswinkel der Aufnahme geringfügig kleiner als der des zugeordneten konischen Abschnittes der Wischerwelle ist, wird die Festigkeit und Verdrehsicherheit der Verbindung von Wischerwelle und Wischarm noch weiter erhöht.

Bei einem Ausführungsbeispiel nimmt die Wanddicke der Aufnahme zur Kante hin ab. Auf diese Weise kann das Befestigungsteil je nach Kundenwunsch an bestimmte Formen von Wellenenden angepaßt und insbesondere kann bestimmten Festigkeitsanforderungen Rechnung getragen werden. Hierzu kann die Aufnahme zylindrisch ausgebildet sein oder die Aufnahme kann eine kegelstumpfförmige Gestalt aufweisen. Je nach Ausgestaltung des Endes der Wischerwelle ist die Aufnahme mit einer entsprechenden Form versehen, so daß sie formschlüssig mit dem Wischerwellenende verbunden werden kann. Eine optimale Anpassung der Aufnahme an das Ende der Wischerwelle wird dadurch erzielt, daß die Wand der Aufnahmen elastisch verformbar ist. Durch das Anziehen der Mutter auf das Ende der Wischerwelle wird das Befestigungsteil z.B. auf die Rändelung des Kegelstumpfes der Wischerwelle aufgepreßt, so daß eine kraft- und formschlüssige Verbindung zwischen Befestigungsteil und Wischerwelle hergestellt wird.

Bei einer Weiterbildung ist vorgesehen, daß die Seitenwangen die Aufnahme in Richtung auf die Fahrzeugscheibe bzw. in Richtung der Wischerwelle überragen. Durch die Seitenwangen kann das Befestigungsteil nahezu bündig mit der Karosserieoberfläche abschließen, so daß nur ein geringer Spalt zwischen der Karosserieoberfläche und der Unterkante des Befestigungsteils besteht. Bei unter der Motorhaube angeordneten Wischerarmen kann auf diese Weise eine extrem flache Bauform erzielt werden, so daß der Spalt zwischen dem der Windschutzscheibe zugewandten Ende der Motorhaube und der Windschutzscheibe, durch den der Wischerarm nach außen geführt wird, relativ schmal gehalten werden kann.

Vorteilhaft ist die nach außen zeigende Fläche des Rückenteils als Anlagefläche für das das Befestigungsteil an der Wischerwelle festlegende Befestigungsmittel, z.B. für eine Befestigungsmutter, ausgebildet. Dabei kann die Anlagefläche glatt oder nach Art eines Federrings geriffelt sein. Hierdurch wird eine Hemmwirkung gegen ein selbsttätiges Lösen der Befestigungsmutter erzielt. In diesem Falle sind keine weiteren Bauelemente zur Sicherung der Befestigungsmutter erforderlich, so daß die Bauform noch flacher gehalten werden kann. Eine insbesondere ebene Auflage gewährleistet außerdem ohne zusätzliche Elemente einen dichten Abschluß des oberen Endes der Aufnahme gegen ein Eindringen von Feuchtigkeit und Schmutz.

Eine kraftschlüssige Verbindung von Befestigungsteil und Wischerwelle kann auf einfache Weise dadurch erzielt werden, daß die der Wischerwelle zugewandte Fläche der Aufnahme eine Oberflächenstruktur aufweist. Wird ein Befestigungsteil mit einer derart ausgebildeten Aufnahme auf ein gerändeltes Ende einer Wischerwelle aufgesetzt und mittels einer Mutter befestigt, dann kann sich die Rändelung in die Oberflächenstruktur der Innenfläche der Aufnahme eingraben. Auf diese Weise wird ein Formschluß erzielt.

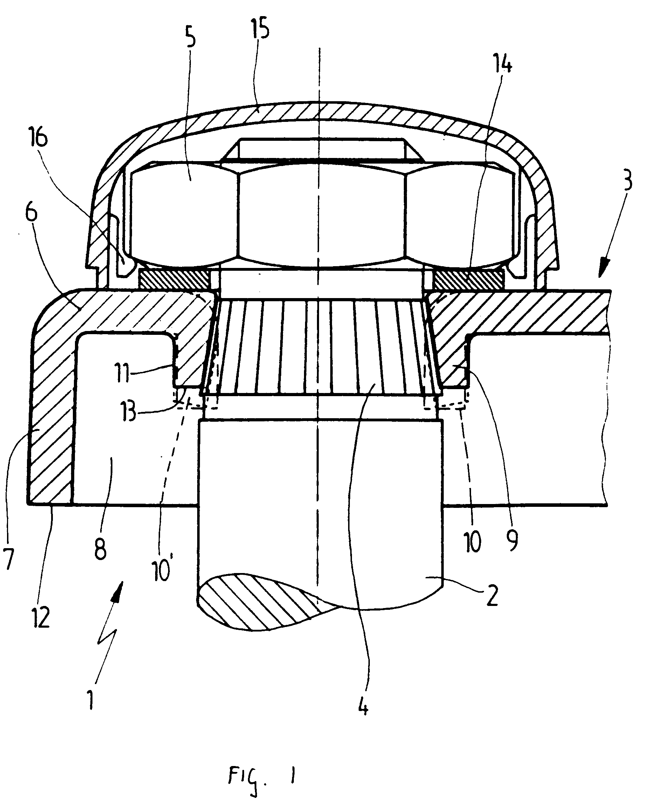

Weitere Merkmale, Vorteile und Einzelheiten der Erfindung ergeben sich aus der nachfolgenden Beschreibung, in der unter Bezugnahme auf die Zeichnung ein besonders bevorzugtes Ausführungsbeispiel im einzelnen wiedergegeben ist. Die einzige Figur der Zeichnung zeigt einen Längsschnitt durch ein auf eine Wischerwelle aufgesetztes Befestigungsteil.

Mit 1 ist das einer Wischerwelle 2 zugewandte Ende eines Befestigungsteils 3 bezeichnet. Dieses Ende 1 ist auf einen gerändelten Konus 4 der Wischerwelle 2 aufgesetzt und mit einer Mutter 5 gegen unbeabsichtigtes und unzeitiges Lösen gesichert. Das Ende 1 weist ein Rückenteil 6, Seitenwangen 7 und 8 und eine Aufnahme 9 auf. Das Rückenteil 6, die Seitenwangen 7 und 8 und die Aufnahme 9 sind durch Tiefziehen aus einem Blechteil geformt. Dabei wird das Blechteil zuerst mit einem Locher mit einem kleinen Durchmesser vorgelocht und anschließend die Aufnahme 9 nach unten eingezogen. Anschließend wird die Aufnahme 9 auf einen Konus mit einem Konuswinkel von 15° bis 20°, insbesondere von 18° 55' aufgeweitet und der so entstandene Hals 10 gestaucht, wobei das Material zur Konusspitze gedrückt wird. Hierdurch wird ein besonders stabiler Verbund von Rückenteil 6 und Aufnahme 9 erzielt. Die äußere Oberfläche 11 der Aufnahme 9 kann dabei zylindrisch ausgeführt werden. In der Zeichnung ist dieser Herstellungsvorgang mit gestrichelten Linie wiedergegeben. Dabei ist der erste Schritt, das Einziehen des zylindrischen Halses 10 mit gestrichelten langen Linien dargestellt und der zu einem Konus aufgeweitete Hals 10' mit gestrichelten kurzen Linien wiedergegeben.

In der Zeichnung ist außerdem deutlich erkennbar, daß die Kanten 12 und 13 der Seitenwangen 7 und 8 sowie der Aufnahme 9 in Richtung der Wischerwelle 2 bzw. in Richtung auf eine nicht dargestellte Windschutzscheibe bzw. Karosserieoberfläche eines Kraftfahrzeugs zeigen. Auf diese Weise kann mit den Seitenwangen 7 und 8 das obere Ende der Wischerwelle 2 überdeckt werden, so daß das Befestigungsteil 3 unmittelbar oberhalb der Karosserieoberfläche endet. Diese Ausgestaltung des Befestigungsteils 3 hat den Vorteil, daß es extrem flach ausgeführt sein kann. Ferner hat die ebene Ausgestaltung des Rückenteils 6 den Vorteil, daß auf der ebenen Außenoberfläche die Mutter 5 z.B. für einen Federring 14 oder einen Dichtungsring aufliegen kann und das Befestigungsteil 3 ohne Zuhilfenahme weiterer Bauteile auf den Rändelkonus der Wischerwelle 2 aufgedrückt wird. Eine optimale kraft- und formschlüssige Verbindung kann dadurch hergestellt werden, daß der Konuswinkel der Aufnahme 9 gerinfügig kleiner ist als der Rändelkonus 4 der Wischerwelle 2, so daß beim Anziehen der Mutter 5 die Aufnahme 9 geringfügig aufgeweitet wird. Außerdem kann die Innenoberfläche der Aufnahme 9, die am Konus 4 anliegt, strukturiert sein, so daß sich die Rändelung in die Strukturierung der Aufnahme 9 eingräbt.

Die Mutter 5 kann, wie in der Zeichnung dargestellt, als einfache Mutter ausgebildet sein, es kann jedoch auch eine Hutmutter verwendet werden. Auf die Mutter 5, wie sie in der Zeichnung wiedergegeben ist, kann nach dem Festziehen eine Abschlußkappe 15 aufgeschnappt werden, die über Rastnasen 16, die die Mutter 5 untergreifen, fest verankerbar ist.

## Patentansprüche

1. Wischarm, insbesondere zur Reinigung einer Scheibe eines Kraftfahrzeuges, mit einem Befestigungsteil (3), welches eine Aufnahme (9) für eine Wischerwelle (2) aufweist, und die Aufnahme (9) an einem ein Rückenteil (6) bildendes Blechteil angeformt und von mit dem Rückenteil (6) verbundenen Seitenwangen (7 und 8) flankiert ist, wobei am Befestigungsteil (3) die Aufnahme (9), das Rückenteil (6) und die Seitenwangen (7 und 8) einteilig angeformt sind und die Kanten (12 und 13) des tiefgezogenen Befestigungsteiles (3) bzw. die Kanten (13 und 12) der Aufnahme (9) und der Seitenwangen (7 und 8) in Richtung auf die Fahrzeugscheibe zeigen, dadurch **gekennzeichnet,** daR die Aufnahme (9) von einem in Richtung auf die Fahrzeugscheibe eingezogenen und konisch aufgeweiteten Hals (10) gebildet ist, der so gestaucht ist, daß Material zur Konusspitze gedrückt ist.

2. Wischarm nach Anspruch 1, dadurch **gekennzeichnet**, daß das Rückenteil (6) eben von den Seitenwangen (7 und 8) in die Aufnahme (9) übergeht.

3. Wischarm nach einem der vorhergehenden Ansprüche, dadurch **gekennzeichnet**, daß der Konuswinkel der Aufnahme (9) geringfügig kleiner ist als der des konischen Abschnittes der Wischerwelle (2).

4. Wischarm nach einem der vorhergehenden Ansprüche, dadurch **gekennzeichnet**, daß die Wanddicke der Aufnahme (9) zur Kante (13) hin abnimmt.

5. Wischarm nach einem der vorhergehenden Ansprüche, dadurch gekennzeichnet, daß die Aufnahme (9) zylindrisch ausgebildet ist.

6. Wischarm nach einem der Ansprüche 1 bis 4, dadurch gekennzeichnet, daß die Aufnahme (9) kegelstumpfförmig ausgebildet ist.

7. Wischarm nach einem der vorhergehenden Ansprüche, dadurch gekennzeichnet, daß die Seitenwangen (7 und 8) die Aufnahme (9) in Richtung auf die Fahrzeugscheibe bzw. in Richtung der Wischerwelle (2) überragen.

8. Wischarm nach einem der vorhergehenden Ansprüche, dadurch gekennzeichnet, daß die Wand der Aufnahme (9) elastisch verformbar ist.

9. Wischarm nach einem der vorhergehenden Ansprüche, dadurch gekennzeichnet, daß die nach außen zeigende Flächen des Rückenteils (6) als Anlageflächen für das das Befestigungsteil (3) an der Wischerwelle (2) festlegende Befestigungsmittel, z.B. für eine Mutter (5), ausgebildet ist.

10. Wischarm nach einem der vorhergehenden Ansprüche, dadurch gekennzeichnet, daß die der Wischerwelle (2) zugeordnete Fläche der Aufnahme (9) eine Oberflächenstruktur aufweist.

11. Wischarm nach einem der vorhergehenden Ansprüche, dadurch gekennzeichnet, daß das Befestigungsteil (3) aus einer Aluminiumlegierung besteht.

## Claims

1. A wiper arm, in particular for cleaning the windscreen of an automotive vehicle, including a fastening component (3) having a receptacle (9) for a wiper shaft (2), which receptacle (9) is integrally moulded to a sheet metal component forming a back (6) and is flanked by side walls (7 and 8) connected with the back (6), with the receptacle (9), back (6) and side walls (7 and 8) being integrally moulded in one piece to the fastening component (3), and the edges (12 and 13) of the deep-drawn fastening component (3) or rather the edges (13 and 12) of the receptacle (9) and the side walls (7 and 8) point toward the windscreen of the vehicle,
characterised in that the receptacle (9) is formed of a conically widened neck (10) which is deep-drawn in the direction of the windscreen of the vehicle and is upset such that material is urged to the apex of the cone.

2. A wiper arm as claimed in claim 1,
characterised in that the back (6) passes over in a level way from the side walls (7 and 8) into the receptacle (9).

3. A wiper arm as claimed in any one of the preceding claims,
characterised in that the angle of the cone of the receptacle (9) is slightly smaller than the cone angle of the conical portion of the wiper shaft (2).

4. A wiper arm as claimed in any one of the preceding claims,
characterized in that the wall thickness of the receptacle (9) diminishes toward the edge (13).

5. A wiper arm as claimed in any one of the preceding claims,
characterised in that the receptacle (9) has a cylindrical design.

6. A wiper arm as claimed in any one of claims 1 to 4,
characterised in that the receptacle (9) has the shape of a frustrum of a cone.

7. A wiper arm as claimed in any one of the preceding claims,
characterised in that the side walls (7 and 8) extend beyond the receptacle (9) toward the windscreen of the vehicle or rather along the direction of the wiper shaft (2).

8. A wiper arm as claimed in any one of the preceding claims,
characterised in that the wall of the receptacle (9) is elastically ductile.

9. A wiper arm as claimed in any one of the preceding claims,
characterised in that the outward-pointing surfaces of the back (6) are designed as abutment surfaces for the fastening means such as a nut (5) fixing the fastening component (3) on the wiper shaft (2).

10. A wiper arm as claimed in any one of the preceding claims,
characterised in that the surface of the receptacle (9) associated with the wiper shaft (2) has a superficial structure.

11. A wiper arm as claimed in any one of the preceding claims,
characterised in that the fastening component (3) consists of an aluminium alloy.

## Revendications

1. Bras d'essuie-glace, notamment pour le nettoyage d'une glace d'un véhicule automobile, comprenant une partie de fixation (3) qui comporte un siège (9) pour un arbre d'essuieglace (2), le siège (9) étant réalisé au formage sur une pièce en tôle, formant une partie dorsale (6), et étant flanqué d'ailes latérales (7 et 8) solidaires de la partie dorsale (6), tandis que le siège (9), la partie dorsale (6) et les ailes latérales (7 et 8) sont réalisés d'une pièce au formage sur la pièce de fixation (3) et que les chants (12 et 13) de la pièce de fixation (3) emboutie, plus précisément les chants (13 et 12) du siège (9) et des ailes latérales (7 et 8), font face en direction de la glace du véhicule, caractérisé en ce que le siège (9) est formé d'un collet qui est repoussé en direction de la glace de véhicule et s'évase d'une manière conique et qui a fait l'objet d'un refoulement, de façon que de la matière soit repoussée vers le sommet du cône

2. Bras d'essuie-glace selon la revendication 1, caractérisé en ce que la partie dorsale (6) se raccorde des ailes latérales (7 et 8) au siège (9) suivant un plan.

3. Bras d'essuie-glace selon l'une des revendications précédentes, caractérisé en ce que l'angle de cône du siège (9) est légèrement inférieur à celui de la section conique de l'arbre d'essuie-glace (2).

4. Bras d'essuie-glace selon l'une des revendications précédentes, caractérisé en ce que l'épaisseur de paroi du siège (9) diminue en direction du chant (13).

5. Bras d'essuie-glace selon l'une des revendications précédentes, caractérisé en ce que le siège (9) est réalisé d'une manière cylindrique.

6. Bras d'essuie-glace selon l'une des revendication 1 à 4, caractérisé en ce que le siège (9) est réalisé avec une forme tronconique.

7. Bras d'essuie-glace selon l'une des revendications précédentes, caractérisé en ce que les ailes latérales (7 et 8) font saillie au-delà du siège (9) en direction de la glace du véhicule ou en direction de l'arbre d'essuie-glace (2).

8. Bras d'essuie-glace selon l'une des revendications précédentes, caractérisé en ce que la paroi du siège (9) est déformable élastiquement.

9. Bras d'essuie-glace selon l'une des revendications précédentes, caractérisé en ce que les surfaces de la partie dorsale (6) qui sont tournées vers l'extérieur sont réalisées de façon à constituer des surfaces d'appui pour le moyen de fixation immobilisant la pièce de fixation (3) sur l'arbre d'essuie-glace (2), par exemple pour un écrou (5).

10. Bras d'essuie-glace selon l'une des revendications précédentes, caractérisé en ce que la surface du siège (9) qui est associée à l'arbre d'essuie-glace (2) comporte une structure de surface.

11. Bras d'essuie-glace selon l'une des revendications précédentes, caractérisé en ce que la pièce de fixation (3) est constituée d'un alliage d'aluminium.
